**Europäisches Patentamt**

**European Patent Office**

**Office européen des brevets**

(11) Numéro de publication: **0 071 578**
**B1**

⑩

## (12) FASCICULE DE BREVET EUROPEEN

(45) Date de publication du fascicule du brevet:
**08.10.86**

(21) Numéro de dépôt: **82810320.0**

(22) Date de dépôt: **28.07.82**

(51) Int. Cl.⁴: **G 01 G 19/44**

(54) **Appareil de pesée tel qu'un pèse-personne.**

(30) Priorité: **31.07.81 CH 4972/81**

(43) Date de publication de la demande:
**09.02.83 Bulletin 83/6**

(45) Mention de la délivrance du brevet:
**08.10.86 Bulletin 86/41**

(84) Etats contractants désignés:
**CH DE FR GB IT LI**

(56) Documents cités:
**DE - A - 2 949 612**
**DE - B - 1 295 872**
**US - A - 3 193 034**
**US - A - 4 050 532**

(73) Titulaire: **Terraillon, Route de Thonon Juvigny,
F-74100 Annemasse (FR)**

(72) Inventeur: **Mairot, Guy, 35, chemin de la Ruaz Vetraz
Monthoux, F-74100 Annemasse (FR)**
Inventeur: **Aumard, Jean-Pierre, 5, Place du Jumelage,
F-74100 Annemasse (FR)**

(74) Mandataire: **Kirker, Gaylord Emile et al, c/o KIRKER &
Cie S.A. 14, Rue du Mont-Blanc Case postale 872,
CH-1211 Genève 1 (CH)**

## Description

Les pèse-personnes comprennent souvent une base, en tôle ou en matière plastique, sur laquelle repose un plateau récepteur de la charge qui repose sur un mécanisme de pesée supporté par la base. Le mécanisme de pesée comprend en général quatre leviers montés pour osciller sur la base, à l'une de leurs extrémités, en quatre endroits de la base situés aux angles d'un quadrilatère. Ces quatre leviers reçoivent chacun une force égale à une partie du poids reposant sur le plateau récepteur et sont agencés pour agir sur un ressort de pesée avec une force en principe égale (ou proportionnelle) à la somme des forces agissant sur les quatre leviers, c'est-à-dire à la charge à peser, le document DE-A-2 949 612 décrit par exemple un tel dispositif.

Toutefois, en pratique, différentes causes perturbatrices interviennent et le résultat est une inexactitude plus ou moins grande de la pesée. Ainsi, par exemple, le sol sur lequel repose la base n'est pas parfaitement régulier, la base et le plateau se déforment dans une certaine mesure sous l'effet de la charge. Les leviers à leur tour subissent des déformations de torsion et le résultat est que les forces transmises au ressort ne sont plus verticales; la précision de la mesure s'en trouve affectée.

La présente invention vise à remédier à ces défauts, au moins dans une mesure telle que l'erreur de pesée résiduelle éventuelle soit négligeable. A cet effet, elle a pour objet un appareil de pesée tel qu'un pèse-personne, conforme à la revendication 1.

Le dessin annexé représente, à titre d'exemple, une forme d'exécution et des variantes de l'appareil de pesée selon l'invention, constituant un pèse-personne.

Fig. 1 est une vue d'ensemble, en plan, de cette forme d'exécution, montrant sa base et son mécanisme de pesée, le plateau récepteur de la charge étant supposé enlevé.

Fig. 2 est une vue latérale partielle du mécanisme de pesée visible sur la fig. 1.

Fig. 3 est une vue partielle, en plan, d'un détail de la fig. 1.

Fig. 4 est une vue en coupe selon 4–4 de fig. 3.

Fig. 5 est une vue partielle, en coupe selon 5–5 de fig. 4.

Fig. 6 est une vue de détail, en coupe et à plus grande échelle.

Fig. 7 est une vue analogue à fig. 6, mais relative à une première variante.

Fig. 8 est une vue analogue à la fig. 6, en coupe selon 8–8 de fig. 9 et relative à une seconde variante.

Fig. 9 est une vue partielle en plan correspondant à fig. 8.

Fig. 10 est une vue analogue à fig. 8 mais relative à une troisième variante encore.

Fig. 11 est une vue analogue à fig. 10 mais relative à une quatrième variante.

Fig. 12 est une vue analogue à fig. 11, en coupe selon 12–12 de fig. 3 et relative à une cinquième variante.

Fig. 13 est une vue en plan correspondant à fig. 12.

Le pèse-personne représenté comporte une base quadrangulaire 1, en matière plastique ou en métal présentant au voisinage de chacun de ses angles, un support en forme de couteau 2a, 2b, 2c, 2d sur lequel repose l'une des extrémités d'un des quatre leviers 3a, 3b, 4a, 4b du mécanisme de pesée.

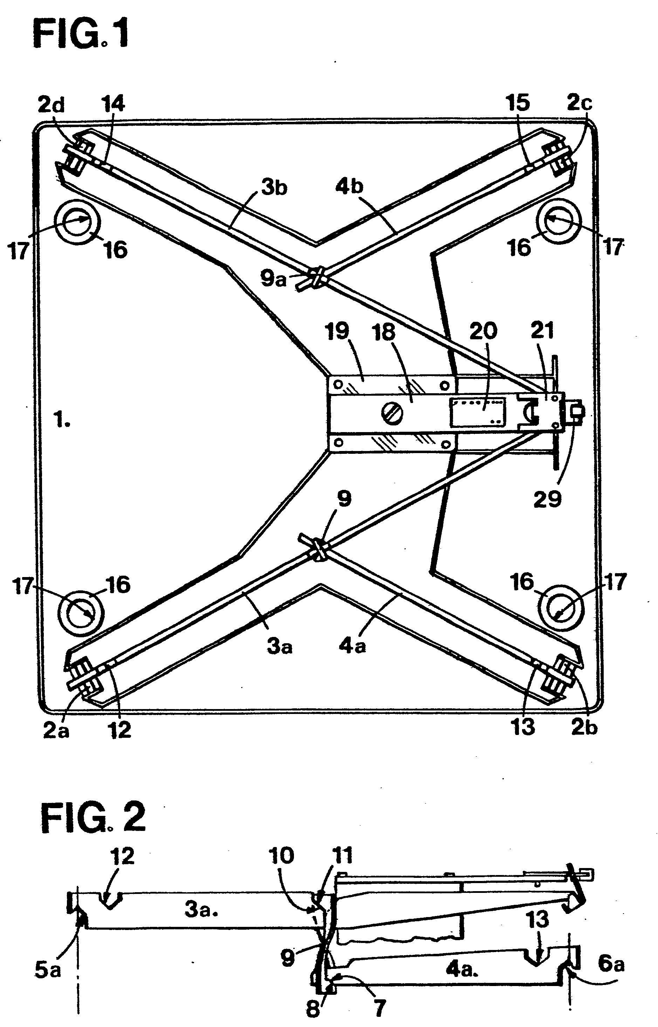

Le levier 3a présente, à son extrémité de gauche sur la fig. 2, une partie découpée 5a, en forme de V, par laquelle le levier repose sur le couteau 2a. Cette disposition connue permet au levier 3a d'osciller pratiquement sans frottement par rapport à la base 1. Le levier 4a présente pareillement une partie découpée 6a en forme de V, par laquelle le levier 4a coopère avec le couteau 2b.

Le levier 3b est identique au levier 3a est présente une encoche en V identique à 5a, par laquelle il repose sur le couteau 2d. De même, le levier 4b est identique à 4a et présente une encoche en V identique à 6a, par laquelle il repose sur le couteau 2c.

Les leviers 4a, 4b, sont beaucoup plus courts que les leviers 3a, 3b, et sont accrochés à ceux-ci par leur extrémité opposée à celle qui est montée de façon oscillante sur la base 1. La fig. 2 montre comment le levier court 4a est accroché au levier long 3a. La disposition est identique pour les leviers 3b, 4b et n'est pas représentée en détail.

L'extrémité de gauche du levier 4a, sur la fig. 2, présente une encoche 7 dont le fond repose sur un premier couteau 8 d'une pièce de liaison 9. Cette pièce présente un deuxième couteau 10 qui coopère avec le fond d'une encoche 11 en V pratiquée dans le levier 3a, à peu près à mi-longueur.

On voit qu'ainsi le levier court 4a est suspendu, par son extrémité de gauche sur la fig. 2, au levier long 3a. L'autre levier court 4b est suspendu de même façon à l'autre levier long 3b, au moyen d'une pièce de liaison 9a (fig. 1) identique à 9.

Les leviers présentent encore chacun une entaille en V destinée à coopérer avec un couteau du plateau récepteur qui repose ainsi sur ces quatre leviers. On voit en 12, 13, 14 et 15 les encoches en question des leviers 3a, 4a, 3b, 4b, respectivement.

La base 1 présente quatre bossages 16 percés chacun d'un trou cylindrique 17 pour recevoir l'un des quatre doigts correspondants du plateau récepteur non représenté.

Le ressort de pesée est constitué par une lame en acier 18 fixée par une partie de sa longueur sur un bloc-support 19 solidaire de la base 1. L'autre partie de sa longueur dépasse, sur la droite de la fig. 1, le bloc 19 est constitue une lame flexible. Sur cette partie, il est placé une ou plusieurs jauges de contrainte 20 qui servent, d'une part, à mesurer la flexion de la partie libre de la lame 18 et, d'autre part, à commander un dispositif d'affichage (non représenté), par l'intermédiaire d'un circuit électronique (également non représenté).

Sur l'extrémité libre de la lame d'acier 18, il est fixé une pièce 21 en métal pouvant être étampée à froid. Cette pièce 21 présente deux bossages de positionnement 22, engagés dans des trous correspondants 23 de la lame 18. La fixation de la pièce 21 sur la lame 18 a lieu grâce à deux pattes 24 de la pièce 21, qui lors du montage sont engagées à travers un trou 25 de la lame-ressort 18, après quoi elles sont écartées l'une de l'autre et appliquées contre la face inférieur de cette lame 18.

La raison d'être de cette pièce 21 est qu'elle présente une gorge en V ou en U 26, faite à froid sur cette pièce, beaucoup plus facilement qu'il serait possible de pratiquer une telle gorge directement sur la lame 18 en acier elle-même.

L'extrémité de droite sur le dessin des leviers longs 3a, 3b, est munie d'une pièce d'appui 27a, 27b, en matière plastique par exemple, qui présente une surface d'appui hémi-sphérique 28 de petit rayon.

Un organe de transmission de force 29 sert à relier comme on le verra les leviers 3a, 3b, à la lame-ressort 18. A cet effet, cet organe 29 présente une fenêtre rectangulaire 30 dont un côté 31 est taillé en couteau. Lors du montage, la fenêtre 30 est enfilée sur la partie terminale 32 de la pièce 21, qui est plus étroite que la partie principale de cette pièce, dont la largeur est la même que celle de la lame-ressort 18. Le couteau du bord 31 de la fenêtre est amené dans la gorge 26 et dès lors, l'organe 29 est suspendu à la lame-ressort. Un organe de retenue 33, en caoutchouc ou en matière plastique, est forcé sur la partie 32 pour empêcher que l'organe 29 quitte sa position de travail représentée.

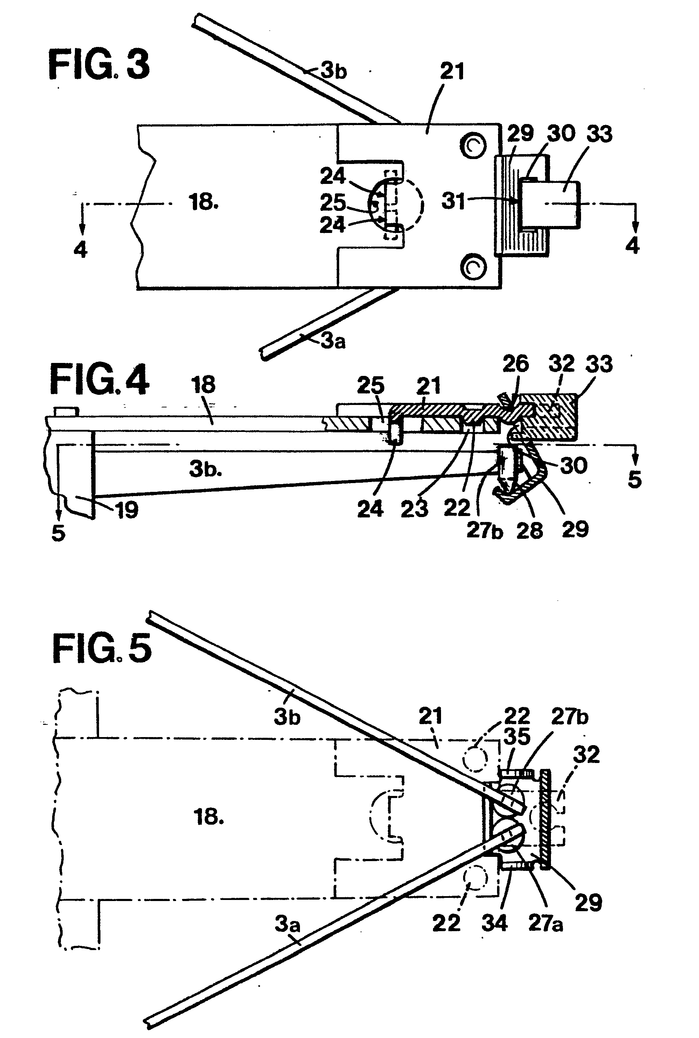

L'organe de transmission de force 29 forme un logement (fig. 4) dans lequel est engagée l'extrémité des longs leviers 3a, 3b, comme on le voit sur les fig. 4 et 5, de façon que ces extrémités reposent dans ce logement par l'intermédiaire des parties hémi-sphériques 28.

Les pièces d'appui 27a, 27b, sont de forme générale cylindrique et de petit diamètre. Elles sont disposées côte à côte dans le logement de l'organe 29, comme il est visible sur la fig. 5. Des parties recourbées 34, 35 de cet organe 29 retiennent en place les pièces d'appui 27a, 27b, côte à côte et symétriquement par rapport au plan longitudinal médian de la lame-ressort 18.

La disposition décrite réduit au minimum l'effet perturbateur d'une répartition dissymétrique de la charge sur le plateau récepteur, ainsi que l'effet de légères déformations de ce plateau et de la base 1. La distance séparant les axes des pièces 27a, 27b, est en effet très petite et tout se passe pratiquement comme si la somme des forces exercées sur les leviers 3a, 4a, 3b, 4b, était transmise dans tous les cas verticalement à la lame-ressort 18, dans le plan de symétrie de cette lame.

Il est à remarquer que, dans l'exemple décrit et représenté, l'agencement suivant contribue à éviter que la lame-ressort 18 soit soumise à un effort de torsion qui agirait sur les jauges de contrainte 20 d'une façon défavorable à la précision du pèse-personne: La longueur du couteau taillé en 31 est très inférieure à la largeur de la lame-ressort 18, la distance des axes des pièces d'appui 27a, 27b, est inférieure à la longueur de ce couteau et est pratiquement négligeable, c'est-à-dire que leur action sur la lame-ressort 18 est verticale (les points d'action de 27a, 27b, sur l'organe suspendu 29 étant à l'aplomb de la rainure 26) et dans le plan vertical de symétrie de cette lame-ressort vu la symétrie et la faible distance entre ces points d'action par rapport à ce plan.

On voit de ce qui précède que ce qui est important pour obtenir une bonne précision, c'est que les extrémités actives des longs leviers 3a, 3b, agissent chacune de façon indépendante sur un organe de transmission de force suspendu de façon oscillante à la lame-ressort de pesée, selon une direction pratiquement verticale et à une distance négligeable (ou nulle) du plan vertical de symétrie de la lame-ressort de pesée, car c'est dans ces conditions que cette lame-ressort sera soumise à une force égale ou proportionnelle à la charge reposant sur le plateau récepteur.

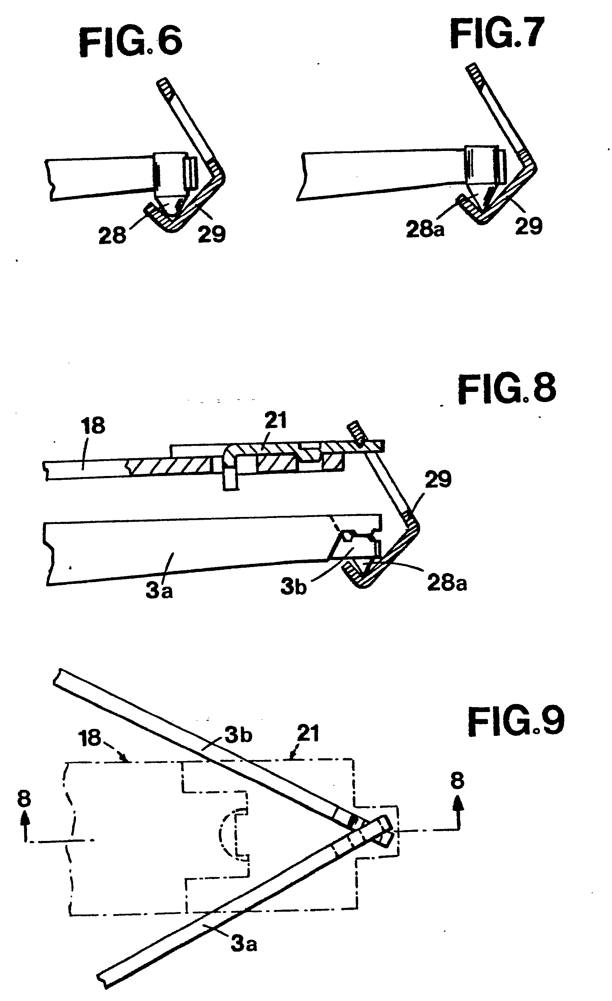

On voit à plus grande échelle, sur la fig. 6, que les têtes hémisphériques coopèrent chacune en deux points avec l'organe 29. Dans la variante selon fig. 7, ces têtes hémisphériques 28 sont remplacées par de simples pointes telles que 28a, ce qui diminue les frictions et augmente la précision.

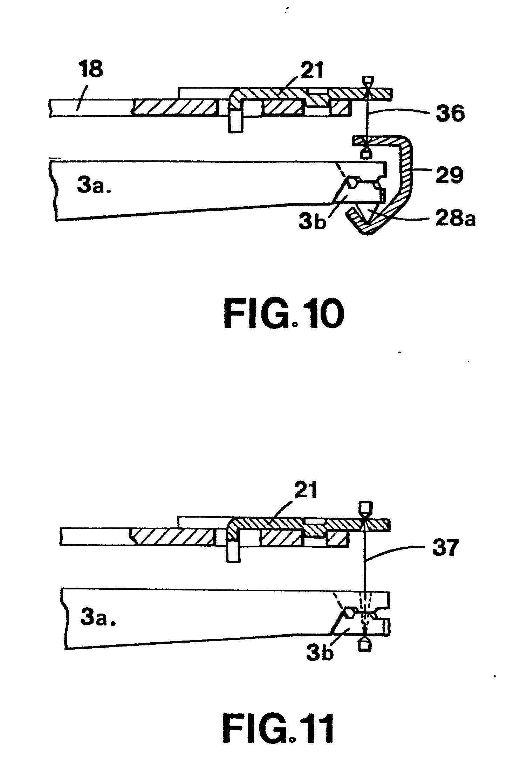

Dans la variante selon fig. 8 et 9, on a agencé les extrémités des longs leviers 3a, 3b de telle façon qu'elles agissent l'une sur l'autre et sur l'organe 29 ou un organe équivalent, exactement dans ce plan de symétrie. Dans la variante selon fig. 10, cet organe 29 agit sur la lame-ressort 18 par l'intermédiaire d'un fil métallique vertical 36 situé dans le plan de symétrie de la lame-ressort.

Dans la variante selon fig. 11, l'organe 29 est supprimé et les deux grands leviers croisés 3a, 3b selon fig. 8 et 9 agissent sur la pièce 21 de la lame-ressort par l'intermédiaire d'un fil métallique 37, au lieu du couteau 31 coopérant avec une gorge 26 comme décrit plus haut à propos des fig. 3 et 4.

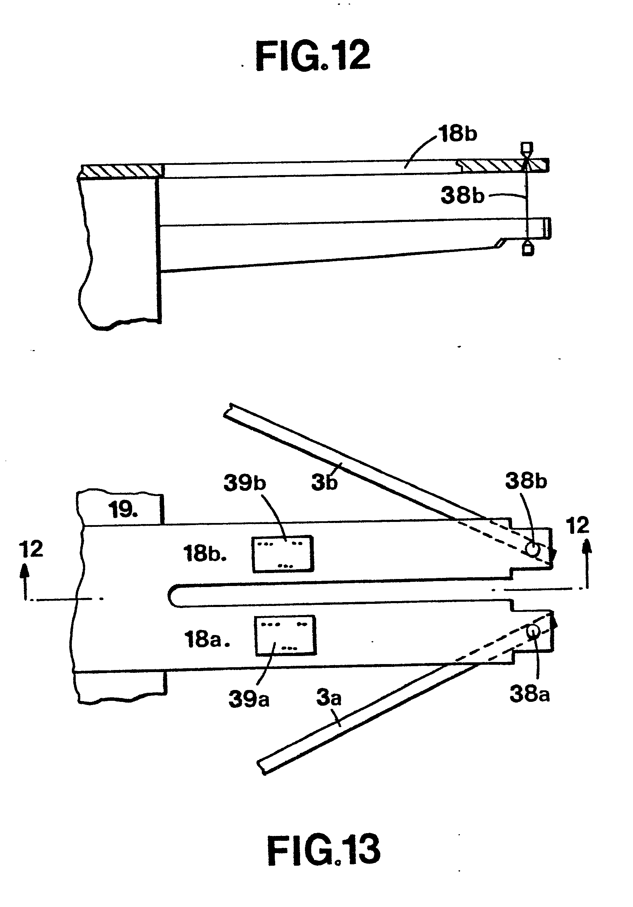

Dans la variante selon fig. 12 et 13, la lame-ressort 18 est divisée en deux bras parallèles 18a, 18b, dans sa partie située à droite du bloc 19 (fig. 1). Dans ce cas, l'extrémité libre de chacun des longs bras 3a, 3b (qui ne se croisent pas) agit sur l'une des demi-lames ressorts 18a, 18b, verticalement et dans le plan médian de la demi-lame, par l'intermédiaire d'un fil métallique 38a, 38b. Chacune de ces deux demi-lames porte une ou plusieurs jauges de contrainte 39a, 39b et tout effet parasite de torsion de la lame-ressort est ainsi évité.

**Revendications**

1. Appareil de pesée tel qu'un pèse-personne, comprenant une base (1) supportant un mécanisme de pesée sur lequel repose un plateau récepteur de la charge à peser, plateau qui est mobile verticalement par rapport à la base (1), le mécanisme de pesée comprenant quatre leviers (3a, 3b, 4a, 4b) montés pour osciller sur la base (1), à l'une de leurs extrémités, en quatre endroits (2a, 2b, 2c, 2d) de la base situés aux angles d'un quadrilatère, deux de ces leviers (3a, 3b) étant plus longs, tandis que les deux autres leviers (4a, 4b) qui sont plus courts que les premiers, appuient chacun par leur autre extrémité sur l'un des deux premiers leviers (3a, 3b) mentionnés, en un endroit situé entre ses extrémités, caractérisé en ce que les deux leviers plus longs (3a, 3b) coopèrent à leur autre extrémité active avec un ressort de pesée (18) constitué par une lame flexible munie d'au moins une jauge de contrainte (20) commandant un dispositif d'affichage, par l'intermédiaire d'un circuit électronique, en ce que le mécanisme de pesée comprend un organe de transmission de force (29) suspendu de façon oscillante à la lame-ressort de pesée (18), en ce que les extrémités actives de deux plus longs leviers (3a, 3b) mentionnés sont mécaniquement indépendantes l'une de l'autre et présentent des moyens d'appui (27a, 27b, 28) disposés pour exercer ensemble sur cet organe de transmission (29), lors d'une pesée, une force pratiquement verticale et à distance négligeable du plan vertical de symétrie de la lame-ressort de pesée (18) et, en conséquence, pratiquement égale ou proportionnelle à la somme des quatre forces exercées sur les quatre leviers par le plateau lorsqu'il est chargé.

2. Appareil selon la revendication 1, caractérisé en ce que l'extrémité de chacun des deux leviers (3a, 3b) qui coopère avec l'organe de transmission (29) susdit, présente une tête d'appui hémisphérique (28) par laquelle il agit sur cet organe (29), les deux têtes d'appui (28) étant disposées côte à côte dans un logement de l'organe de transmission (29), symétriquement par rapport au plan longitudinal médian de la lame-ressort (18) et à distance négligeable de ce plan.

3. Appareil selon la revendication 1 ou 2, caractérisé en ce que le dit organe de transmission (29) présente une ouverture (30) à travers laquelle passe l'extrémité libre (21, 32) de la lame-ressort de pesée (18), un côte (31) de cette ouverture (30) étant conformé en couteau et coopérant avec une encoche (26) correspondante de la lame-ressort (18, 21).

4. Appareil selon la revendication 3, caractérisé en ce que le corps de la lame-ressort (18) de pesée est en acier, une pièce d'extrémité (21) en métal capable d'être étampée à froid étant rapportée à froid sur l'extrémité libre du corps de la lame-ressort (18) et présentant l'encoche (26).

5. Appareil selon la revendication 3, caractérisé en ce que les deux têtes d'appui susdites (27a, 27b) agissent sur l'organe de transmission (29) en un endroit qui est à l'aplomb de l'endroit de suspension (31, 26) de cet organe (29) à la lame-ressort de pesée (18, 21).

### Claims

1. A weighing machine, such as bathroom scales, comprising a base (1) supporting a weighing mechanism on which a platform rests which receives the load to be weighed, the said platform being vertically mobile relative to the base (1), the weighing mechanism comprising four levers (3a, 3b, 4a, 4b) mounted so as to oscillate on the base (1), at one of their ends, at four points on the base (2a, 2b, 2c, 2d) which are located at the corners of a trapezoid, two of these levers (3a, 3b) being longer and the other two levers (4a, 4b), which are shorter than the first, each bearing, by their other end, on one of the two first levers mentioned (3a, 3b), at a point located between its ends, characterized in that the two longer levers (3a, 3b) interact at their other active end with a weighing spring (18) consisting of a flexible leaf fitted with at least one stress gauge (20) controlling a display device via an electronic circuit, in that the weighing mechanism comprises a force-transmitting member (29) suspended in an oscillating fashion from the weighing leaf-spring (18), and in that the active ends of the two longer levers mentioned (3a, 3b) are mechanically independent of one another and possess bearing means (27a, 27b, 28) which are arranged so that they together exert on this transmission member (29), during a weighing operation, a force which is practically vertical and a negligible distance from the vertical plane of symmetry of the weighing leaf-spring (18) and, consequently, practically equal or proportional to the sum of the four forces exerted on the four levers by the platform when it is loaded.

2. The machine according to Claim 1, characterized in that the end of each of the two levers (3a, 3b) which interacts with the abovementioned transmission member (29) has a hemispherical bearing head (28) through which it acts on this member (29), the two bearing heads (28) being arranged side-by-side in a housing for the transmission member (29), symmetrically relative to the longitudinal mid-plane of the leaf-spring (18) and at a negligible distance from this plane.

3. The machine according to Claim 1 or 2, characterized in that the said transmission member (29) has an orifice (30) through which the free end (21, 32) of the weighing leaf-spring (18) passes, one side (31) of this orifice (30) being knife-shaped and interacting with a corresponding notch (26) in the leaf-spring (18, 21).

4. The machine according to Claim 3, characterized in that the body of the weighing leaf-spring (18) is made of steel, a metal end-piece (21), which can be cold-stamped, being joined in the cold to the free end of the body of the leaf-spring (18) and possessing the notch (26) which interacts with the abovementioned knife.

5. The machine according to Claim 3, characterized in that the two abovementioned bearing heads (27a, 27b) act on the transmission member (29) at a point which is in vertical alignment with the point (31, 26) where this member (29) is suspended from the weighing leaf-spring (18, 21).

### Patentansprüche

1. Wiegevorrichtung, wie etwa eine Personenwaage, mit einer Grundplatte (1) welche einen Wiegemechanismus trägt, auf welchem eine Waagplatte für die Aufnahme des Wiegeguts liegt, wobei die Waagplatte gegenüber der Grundplatte (1) senkrecht bewegbar ist, und der Wiegemechanismus vier Hebel (3a, 3b, 4a, 4b) aufweist, die derart mit einem ihrer Enden, an vier Stellen (2a, 2b, 2c, 2d) der Grundplatte, welche ein Viereck bilden, und auf die Waagplatte (1) montiert sind, so dass sie beweglich sind, wobei zwei der Hebel (3a, 3b) länger als die beiden ersten sind, und die beiden andern, kürzeren Hebel (4a, 4b) mit ihrem andern Ende je auf einem der ersten Hebel (3a, 3b) an einer Stelle zwischen deren Enden, abgestützt sind, dadurch gekennzeichnet, dass die beiden längern, ersten Hebel (3a, 3b) mit ihren beiden andern, beweglichen Enden mit einer Wiegefeder (18), die von einer biegsamen Blattfeder gebildet wird, zusammenwirken, welche wenigstens einen Spannungsmessgeber (20) aufweist, der über eine elektronische Schaltung einer Anzeige steuert, dass der Wiegemechanismus ein Kraftübertragungsorgan (29) aufweist, das an der Wiege-Blattfeder (18) beweglich aufgehängt ist, derart, dass die beweglichen Enden der beiden erwähnten längern Hebel (3a, 3b) mechanisch voneinander unabhängig sind und dass sie Lagerorgane (27a, 27b, 28) aufweisen, die derart ausgebildet sind, dass sie beim Wiegen auf das Kraftübertragungsorgan (29) gemeinsam, in vernachlässigbarem Abstand zur senkrechten Symmetrie-Ebene der Wiege-Blattfeder (18), eine praktisch senkrechte Kraft ausüben, welche praktisch gleich, oder proportional zur Summe der vier, von der beladenen Waagplatte auf die vier Hebel ausgeübten Kräfte, ist.

2. Vorrichtung nach Patentanspruch 1, dadurch gekennzeichnet, dass das Ende jedes Hebels (3a, 3b), das mit dem genannten Kraftübertragungsorgan (29) zusammenwirkt, einen halbkugelförmigen Lagerkopf (28) aufweist, mit welchem er auf das Kraftübertragungsorgan (29) wirkt, und die zwei Lagerköpfe (28) nebeneinander in einem Lager des Kraftübertragungsorgans (29), symmetrisch zur Längssymmetrie-Ebene der Blattfeder (18) und in vernachlässigbarem Abstand zu dieser Ebene angeordnet sind.

3. Vorrichtung nach Patentanspruch 1 oder 2, dadurch gekennzeichnet, dass das Kraftübertragungsorgan (29) eine Öffnung (30) aufweist, in welche das freie Ende (21, 32) der Wiege-Blattfeder (18) eingreift, und die eine Seite (32) dieser Öffnung (30) als Schneide ausgebildet ist, die mit einer ihr entsprechenden Kerbe (26) der Blattfeder (18, 21) zusammenwirkt.

4. Vorrichtung nach Patentanspruch 3, dadurch gekennzeichnet, dass der Körper der Wiege-Blattfeder (18) aus Stahl besteht, und ein Endstück (21) aus einem Metall besteht, das kaltgestanzt und auf dem freien Ende des Körpers der Wiegeblattfeder (18) kaltangefügt ist und welches die Kerbe (26) aufweist, die mit der genannten Schneide zusammenwirkt.

5. Vorrichtung nach Patentanspruch 3, dadurch gekennzeichnet, dass die beiden genannten Lagerköpfe (27a, 27b) auf das Kraftübertragungsorgan (29) in einem Bereich abgestützt sind, der sich in der Senkrechten zur Aufhängung (31, 26) des Übertragungsorgans (29) an der Wiege-Blattfeder (18, 21) befindet.

# FIG.1

# FIG. 2

**FIG. 3**

**FIG. 4**

**FIG. 5**

0 071 578

# FIG.6

# FIG.7

28   29

28a   29

# FIG.8

18          21

29

3a          3b        28a

# FIG.9

18        3b      21

8                    8

3a

11

**FIG.10**

**FIG.11**

# FIG. 12

18b

38b

# FIG. 13

19.

39b    3b    38b

12

18b.

12

18a.

39a    3a    38a